# EUROPÄISCHE PATENTSCHRIFT

(11) **EP 3 615 364 B1**
(45) Veröffentlichungstag und Bekanntmachung des Hinweises auf die Patenterteilung: **02.06.2021**
(21) Anmeldenummer: 18718759.6
(22) Anmeldetag: 10.04.2018
(51) Int. Cl.: B60K 1/04, B60L 50/60

(54) **AKKUMULATORANORDNUNG**
RECHARGEABLE BATTERY ARRANGEMENT
ENSEMBLE ACCUMULATEUR

(30) Priorität: 26.04.2017 DE 102017206986
(43) Veröffentlichungstag der Anmeldung: 04.03.2020
(73) Patentinhaber: Mahle International GmbH, 70376 Stuttgart (DE)
(72) Erfinder: HIRSCH, Stefan, 70180 Stuttgart (DE); MOSER, Michael, 73479 Ellwangen (DE); NEFF, Heiko, 71549 Auenwald (DE); WALLISCH, Mario, 72631 Aichtal (DE)
(74) Vertreter: BRP Renaud & Partner mbB Rechtsanwälte Patentanwälte Steuerberater
(86) Internationale Anmeldenummer: PCT/EP2018/059166
(87) Internationale Veröffentlichungsnummer: WO 2018/197203

(56) Entgegenhaltungen:
- EP-A1- 2 620 353
- EP-A2- 2 072 308
- WO-A1-2016/088476
- FR-A1- 2 993 511
- US-A1- 2012 181 981

## Beschreibung

Die vorliegende Erfindung betrifft eine Akkumulatoranordnung, insbesondere für ein Kraftfahrzeug, mit einem Aufnahmeraum zur Aufnahme von mindestens einem Batteriemodul, mit einer im Aufnahmeraum angeordneten Versorgungseinrichtung, die zur Versorgung des mindestens einen Batteriemoduls vorgesehen ist, sowie einer Schutzabdeckung, die den Aufnahmeraum zumindest teilweise verschließt, gemäß dem Oberbegriff des Anspruchs 1.

Bei heutigen elektrisch betriebenen Kraftfahrzeugen kommen zur Speicherung von elektrischer Energie sogenannte Traktionsbatterien zum Einsatz. Die Traktionsbatterien sind oftmals aus mehreren miteinander elektrisch verschalteten Batteriemodulen gebildet, die in einem dafür vorgesehenen bevorzugt abgedichteten Akkumulatorgehäuse angeordnet sind. Diese Akkumulatorgehäuse dienen zum Schutz der Elektronik vor äußeren Einflüssen und bestehen in der Regel aus einer Gehäuseoberschale und einer Gehäuseunterschale. Allgemein besitzen derartige Akkumulatorgehäuse eine hohe Anforderung insbesondere an Dichtigkeit, aufgrund der zum Teil sehr hohen Spannungen der einzelnen Batteriemodule. Ein Austausch solcher Batteriemodule stellt derweil einen hohen Montageaufwand dar, da in aller Regel die Batteriemodule an sich zusammen mit dem Akkumulatorgehäuse ausgebaut werden müssen, um besagtes Akkumulatorgehäuse überhaupt öffnen zu können

EP2620353 offenbart eine Akkumulatoranordnung für ein Kraftfahrzeug umfassend einen Aufnahmeraum zur Aufnahme von mindestens einem Batteriemodul, der Aufnahmeraum wird an einer Unterseite eines Fahrgestells des Kraftfahrzeugs ausgebildet, eine im Aufnahmeraum angeordnete Versorgungseinrichtung, die zur Versorgung des mindestens einen Batteriemoduls vorgesehen ist und eine Schutzabdeckung die den Aufnahmeraum zumindest teilweise verschließt.

Aus der DE 10 2012 012 891 A1 ist eine Vorrichtung zur Verbindung von zumindest zwei in zumindest einer Reihe angeordneten Batteriemodulen in einem Batteriekasten eines Fahrzeugs, welche Batteriemodule unter Zwischenlage einer Verbindungsplatte aneinandergrenzen, allgemein bekannt. Die Verbindungsplatte weist hierzu an einer Modulseite Zentrierelemente auf, die in korrespondierenden Zentrieröffnungen der beiden aneinandergrenzenden Batteriemodule einragen.

Ferner ist insbesondere an der gegenüberliegenden Modulseite ein funktionell von der Verbindungsplatte entkoppeltes Verbindungselement vorgesehen, das die beiden aneinandergrenzenden Batteriemodule an der gegenüberliegenden Modulseite miteinander verbindet. Der Batteriekasten, gebildet aus einer Oberschale und einer Unterschale, taucht dabei in einen Mitteltunnel eines Fahrzeugkarosseriebodens ein.

Nachteilig am derzeitigen Stand der Technik ist es, dass beispielsweise zur Wartung einzelner Batteriemodule in der Regel die gesamte Traktionsbatterie, das heißt, das gesamte Akkumulatorgehäuse, inklusive der darin angeordneten Batteriemodule, demontiert werden muss. Da die Traktionsbatterien verhältnismäßig groß und sehr schwer sind, ist der Aufwand für die Montage und die Demontage extrem aufwendig und zudem kostenintensiv. Ferner sind die gängigen Akkumulatorgehäuse überhaupt nicht oder nur stark begrenzt zur Steigerung einer Strukturfestigkeit der Fahrzeugkarosserie als solches von Nutzen.

Die vorliegende Erfindung beschäftigt sich daher mit der Aufgabe, für eine Akkumulatoranordnung der eingangs genannten Art eine verbesserte oder zumindest alternative Ausführungsform anzugeben, die insbesondere die vorstehend beschriebenen Nachteile zumindest teilweise überwindet und zudem durch eine vereinfachte Fertigung kostengünstig herstellbar ist.

Diese Aufgabe wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, bei einer Akkumulatoranordnung, einen Aufnahmeraum zur Aufnahme von mindestens einem Batteriemodul direkt durch eine an einer Unterseite eines Fahrgestells des Kraftfahrzeuges ausgebildete Aussparung auszubilden und eine Versorgungseinrichtung zur Versorgung des mindestens einen Batteriemoduls unmittelbar an eben dieser Unterseite einer die Aussparung begrenzenden Wand des Fahrgestells vorzusehen. Die Versorgungseinrichtung weist hierbei wenigstens eine erste Schnittstelle auf, die mit dem zumindest einen Batteriemodul in Wirkverbindung steht. Durch die Bereitstellung eines sogenannten "Plug&Play"-Anschlusses in Form der wenigstens einen ersten Schnittstelle der Versorgungseinrichtung ist es somit möglich, einzelne Batteriemodule in die Akkumulatoranordnung zu montieren oder aus der Akkumulatoranordnung zu demontieren ohne eine vorgelagerte aufwendige Demontage der gesamten Traktionsbatterie. Durch die Aussparung an der Unterseite des Fahrgestells und den dadurch gebildeten Aufnahmeraum entfallen erfindungsgemäß eine separate Gehäuseoberschale, sowie separate seitliche Gehäusewandungen, sodass der Aufnahmeraum bis auf die Schutzabdeckung durch das Fahrgestell begrenzt ist. Folglich bildet das Fahrgestell zumindest teilweise ein derartiges Akkumulatorgehäuse ab. Dies ist insbesondere von Vorteil in Bezug auf eine verbesserte Strukturfestigkeit der Fahrzeugkarosserie. Ein separates Akkumulatorgehäuse ist nur begrenzt zur Erhöhung der Strukturfestigkeit geeignet, wohingegen bei der erfindungsgemäßen Lösung das Akkumulatorgehäuse, als Teil des Fahrgestells, somit vollständig zur Strukturfestigkeit der Fahrzeugkarosserie beiträgt. Die Akkumulatoranordnung weist hierzu den Aufnahmeraum zur Aufnahme des mindestens einen Batteriemoduls auf, die im Aufnahmeraum angeordnete Versorgungseinrichtung, die zur Versorgung des mindestens einen Batteriemoduls vorgesehen ist, sowie eine Schutzabdeckung, die den Aufnahmeraum zumindest teilweise verschließt. Der durch die Aussparung am Fahrgestell ausgebildete Aufnahmeraum substituiert erfindungsgemäß eine herkömmliche Gehäuseoberschale, indem das zumindest eine Batteriemodul mittelbar und/oder unmittelbar zumindest teilweise direkt vom Fahrgestell umschlossen ist. Die beschriebene Akkumulatoranordnung vereinfacht in erheblichem Maße die Wartungsmöglichkeit von Batteriemodulen, da lediglich die Schutzabdeckung zur Zuführung oder Entnahme der jeweiligen Batteriemodule demontiert werden muss.

Zumindest ein Batteriemodul der Akkumulatoranordnung weist ebenfalls die zumindest eine zweite Schnittstelle auf, die komplementär zu der wenigstens einen ersten Schnittstelle der Versorgungseinrichtung ausgebildet ist, so dass das zumindest eine Batteriemodul mit der Versorgungseinrichtung in Wirkverbindung steht. Die erste Schnittstelle und die zweite Schnittstelle sind jeweils steckbar ausgeführt, so dass ein schnelles Zuführen oder Entnehmen ermöglicht wird. Es sei gesagt, das sowohl die zumindest eine erste Schnittstelle an der Versorgungseinrichtung als auch die zweite Schnittstelle an dem zumindest einen Batteriemodul beliebig ausgeformt sein können.

Eine weitere vorteilhafte Ausführungsform sieht vor, dass die wenigstens eine erste Schnittstelle an der Versorgungseinrichtung sowie die zumindest eine zweite Schnittstelle am Batteriemodul insbesondere zumindest eine elektrische Anschlussleitung für ein elektrisches Bordnetz und/oder zumindest eine elektrische Signalleitungen für ein Batteriemanagementsystem und/oder zumindest eine elektrische Leitung für ein Thermomanagement und/oder zumindest eine Rohrleitung zur Leitung eines Fluids und/oder zumindest eine Befestigungseinrichtung umfassen. Alle denkbaren Verbindungen zwischen der Versorgungseinrichtung und dem zumindest einen Batteriemodul sind im Rahmen dieser Erfindung mit geschützt. Die angegebenen Wirkverbindungen zwischen der Versorgungseinrichtung und eben dem zumindest einen Batteriemodul können jeweils für sich alleine oder in Kombination zur Anwendung kommen.

Zweckmäßig kann vorgesehen sein, dass die wenigstens eine erste Schnittstelle an der Versorgungseinrichtung sowie die zumindest eine zweite Schnittstelle am Batteriemodul zumindest eine elektrische Leitung und zumindest eine Rohrleitung zur Leitung eines Fluids umfassen. Es werden also elektrische und fluidische Verbindungen in den Schnittstellen zusammengefasst, um die Montage zu vereinfachen.

Besonders vorteilhaft ist eine Ausführungsform, bei der das Fluid zum Kühlen des jeweiligen Batteriemoduls verwendet wird. Das Fluid ist dann also ein Kühlmittel. Besonders effizient ist dabei eine Kühlflüssigkeit. Das jeweilige Batteriemodul kann zweckmäßig so ausgestaltet sein, dass es neben Batteriezellen außerdem eine Kühlstruktur aufweist, die vom jeweilien Kühlmittel durchströmbar ist. Somit wird die komplette Logistik zum Kühlen der Batteriezellen innerhalb des Batteriemoduls bereitgestellt. Dies vereinfacht den Aufbau des fahrzeugseitigen Aufnahmeraums. Demnach kann das jeweilige Batteriemodul eine von der Kühlflüssigkeit durchströmbare Kühlstruktur aufweisen, die mit der jeweiligen zweiten Schnittstelle fluidisch verbunden ist.

Besonders vorteilhaft ist nun eine Weiterbildung, bei der im Aufnahmeraum ein das jeweilige Batteriemodul umgebender Trockenraum ausgebildet ist, der frei von der Kühlflüssigkeit ist. Mit anderen Worten, im Aufnahmeraum werden die Batteriemodule nicht vom jeweiligen Kühlmittel umströmt. Das Kühlmittel strömt ausschließlich in den Batteriemodulen, was die Effizienz der Kühlung verbessert.

In einer vorteilhaften Weiterbildung ist das zumindest eine Batteriemodul in Z-Richtung entlang der Aussparung begrenzenden Wand der Versorgungseinrichtung einsetzbar und ebenso entnehmbar. Das heißt, dass das zumindest eine Batteriemodul, bezogen auf das Beispiel bei der Verwendung in einem Kraftfahrzeug, von unten nach oben in den dafür vorgesehenen Aufnahmeraum am Fahrgestell des Kraftfahrzeugs einsetzbar ist.

Eine weitere zweckmäßige Weiterbildung sieht vor, dass die wenigstens eine erste Schnittstelle an der Versorgungseinrichtung sowie die zumindest eine zweite Schnittstelle am Batteriemodul steckbar sind. Das heißt, dass die wenigstens eine erste Schnittstelle an der Versorgungseinrichtung beispielsweise als eine Buchse ausgebildet ist und die zumindest eine zweite Schnittstelle am Batteriemodul als ein Stecker ausgebildet ist. Der Stecker und die Buchse sind wie zuvor beschrieben komplementär zueinander ausgebildet, so dass bei einem Einsetzen eines derartigen Batteriemoduls, also der Bewegung in Richtung der Versorgungseinrichtung entlang der Z-Achse, die zuvor beschriebene Buchse an der Versorgungseinrichtung den Stecker des Batteriemoduls aufnimmt und eine Wirkverbindung herstellt.

In einer bevorzugten Weiterbildung der erfindungsgemäßen Idee ist eine an der Versorgungseinrichtung vorgesehene Befestigungseinrichtung als eine lösbare form- und/oder kraftschlüssige Wirkverbindung ausgebildet. Die Befestigungseinrichtung dient somit einer Fixierung des zumindest einen Batteriemoduls. Hierzu ist die Befestigungseinrichtung derart ausgebildet, dass diese zumindest das Eigengewicht des zumindest einen Batteriemoduls tragen kann. Dies dient insbesondere der Sicherheit bei der Montage und der Demontage, da das zumindest eine Batteriemodul gegen ein ungewolltes Lösen von der Versorgungseinrichtung bzw. gegen ein ungewollte Herausfallen aus dem Aufnahmeraum gesichert ist. Bevorzugt ist die Befestigungseinrichtung als eine Rastverbindung ausgestaltet, die derart ausgebildet ist, dass mit dieser das zumindest eine Batteriemodul an der Versorgungseinrichtung, insbesondere in Z-Richtung, fixiert bzw. verrastet werden kann. Besonders bevorzugt ist die Befestigungseinrichtung als eine Feder-Rast-Verbindung ausgebildet, sodass neben dem einfachen verrasten ebenso mit Hilfe einer Feder ein Lösen der Rastverbindung in einfachster Weise ermöglicht ist.

Zweckmäßig ist die Schutzabdeckung der Akkumulatoranordnung derart ausgebildet, dass diese den Aufnahmeraum, insbesondere fluiddicht, verschließt.

Das heißt, dass die Schutzabdeckung den durch die Aussparung am Fahrgestell ausgebildeten Aufnahmeraum zumindest einseitig begrenzt.

In einer vorteilhaften Ausführungsform liegt die Schutzabdeckung unmittelbar an der Unterseite des Fahrgestells an und überdeckt dabei zumindest den Bereich der Aussparung oder mit anderen Worten den Bereich der offenen Seite des Aufnahmeraums.

Eine zweckmäßige Weiterbildung sieht vor, dass die Schutzabdeckung mittels einer Haltevorrichtung, insbesondere einer Schraubverbindung, an der Unterseite des Fahrgestells gehalten ist. Beispielsweise kann die Haltevorrichtung in einem Bereich einer Überlappung der Schutzabdeckung zur Aussparung angeordnet sein. Ebenso denkbar ist es, dass die Schutzabdeckung mittels der Haltevorrichtung an der Unterseite der die Aussparung begrenzenden Wand des Fahrgestells gehalten ist.

In einer weiteren zweckmäßigen Weiterbildung ist zwischen der Schutzabdeckung und der Unterseite des Fahrgestells eine Dichtung, insbesondere eine geschlossene umlaufende Ringdichtung, vorgesehen, die bevorzugt zumindest teilweise zwischen der Schutzabdeckung und der Unterseite des Fahrgestells verpresst ist. Die Abdichtung dient im Wesentlichen dem Schutz der Elektronik im Bereich des Aufnahmeraums. Die Anordnung einer umlaufenden Ringdichtung stellt eine kostengünstige und effektive Abdichtung der zu schützenden Elektronik dar.

Eine bevorzugte Weiterbildung der erfindungsgemäßen Akkumulatoranordnung sieht vor, dass die Schutzabdeckung an einer der Aussparung zugewandten Seite im Bereich des Aufnahmeraumes, insbesondere im Bereich des zumindest einem Batteriemoduls, eine Positioniereinrichtung aufweist die derart ausgebildet ist, dass diese das zumindest eine Batteriemodul im Aufnahmeraum ausrichtet und insbesondere zumindest teilweise fixiert. Bei einem Verschließen des Aufnahmeraums mittels der Schutzabdeckung ist die Schutzabdeckung entlang der Z-Achse in Richtung der Versorgungseinrichtung zu bewegen. Dabei werden die einzelnen im Aufnahmeraum angeordneten Batteriemodule durch die Positioniereinrichtung passend positioniert und schlussendlich formschlüssig fixiert.

Ferner kann neben der zuvor beschriebenen teilweisen Fixierung des zumindest einen Batteriemoduls mittels der Positioniereinrichtung eine weitere Fixierung des zumindest einen Batteriemoduls in einer zusätzlichen Ausführungsform vorgesehen sein. Hierbei ist das zumindest eine Batteriemodul fest an der Schutzabdeckung mittels zumindest einer Schraubverbindung, insbesondere mit mehreren Schraubverbindungen, fixiert. An dem zumindest einen Batteriemodul ist hierzu beispielsweise ein Gewinde vorgesehen, wobei die Schutzabdeckung konzentrisch zum Gewinde eine Durchgangsbohrung aufweist, durch die eine komplementär zum Gewinde ausgebildete Schraube durchführbar ist. Ebenso denkbar ist, dass das Gewinde im Bereich der Durchgangsbohrung angeordnet ist und die Schraube in eingeschraubten Zustand das zumindest eine Batteriemodul in Z-Richtung gegen die Versorgungseinrichtung bzw. die Unterseite der die Aussparung begrenzenden Wand des Fahrgestells drückt und damit verspannt.

Eine Weiterbildung der zuvor beschriebenen Ausführungsform sieht vor, dass eine Schraube der Schraubverbindung zwischen der Schutzabdeckung und dem jeweiligen Batteriemodul eine elektrische Verbindung zwischen zumindest zwei Batteriemodulen je nach Einschraubgrad der Schraube herstellt oder trennt. Das heißt, dass bei der Montage der Schutzabdeckung mittels einer Schraubverbindung, eben diese Schraubverbindungen gleichermaßen die elektrischen Verbindungen zwischen zumindest zwei Batteriemodulen herstellen können. Dies geschieht bevorzugt durch Einsetzten von zumindest einer Schraube pro Modulverbindung. Ferner ist die Kontaktierung zwischen den Batteriemodulen bevorzugt federnd ausgeführt, so dass umgekehrt beim Lösen der Schrauben bzw. Entfernen der Schrauben die elektrischen Verbindungen zwischen den zumindest zwei Batteriemodulen wieder getrennt werden. Durch die vorteilhafte Weiterbildung ist das Öffnen des Aufnahmeraumes der Batteriemodule nur möglich, wenn keine elektrischen Verbindungen zwischen den einzelnen Batteriemodulen bestehen. Diese Ausgestaltung erhöht in signifikanter Weise die Sicherheit vor einem Stromschlag bei der Demontage einzelner Batteriemodule. Bei dieser Ausführungsform sind die Schrauben der Schraubverbindung bevorzugt zu jedem Zeitpunkt frei von jeglichem elektrischen Potential. Hierzu können die Schrauben beispielsweise an einer dem Schraubenkopf abgewandten Seite einen Isolator aufweisen, der die Schraube vom elektrischen Fluss der elektrischen Verbindung trennt.

In einer weiteren Ausführungsform ist die Schutzabdeckung zwischen dem Fahrgestell und einem Kraftfahrzeugunterfahrschutz gehalten. Beispielsweise ist die Schutzabdeckung durch ein Fixieren des Kraftfahrzeugunterfahrschutzes zwischen eben diesem und der Unterseite des Fahrgestells verpresst. Vorteilhaft hierbei ist die vereinfachte Demontage der einzelnen Batteriemodule, da lediglich der Kraftfahrzeugunterfahrschutz gelöst werden muss, um an die besagten Batteriemodule heranzukommen.

Die erfindungsgemäße Anordnung kann in einer beliebigen Anwendung zum Einsatz kommen. Vorstellbar ist es insbesondere, die Anordnung in einem Kraftfahrzeug einzusetzen. Dabei kann der Akkumulator im Kraftfahrzeug zum Antreiben des Kraftfahrzeugs zum Einsatz kommen.

Ein erfindungsgemäßes Kraftfahrzeug mit einer derartigen zuvor beschriebenen Akkumulatoranordnung weist zumindest eine Schutzabdeckung auf, wobei die Schutzabdeckung insbesondere mit einem Kraftfahrzeugunterfahrschutz einteilig bzw. monolithisch ausgebildet ist. Somit ist das aus dem Stand der Technik bekannte Akkumulatorgehäuse, aus einer Gehäuseoberschale und einer Gehäuseunterschale, vollends in bereits vorhandene Fahrzeugkomponenten integriert. Mit anderen Worten bildet das Fahrgestell durch die Einbringung der zuvor beschriebenen Aussparung die Gehäuseoberschale ab und der Kraftfahrzeugunterfahrschutz stellt die Gehäuseunterschale dar, so dass gänzlich auf ein separates herkömmliches Akkumulatorgehäuse verzichtet werden kann. Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Prinzipdarstellung einer erfindungsgemäßen Akkumulatoranordnung mit einem durch eine Schutzabdeckung verschlossenen Aufnahmeraum zur Aufnahme von mindestens einem Batteriemodul,
- Fig. 2: die Prinzipdarstellung aus Fig. 1 mit einer unverschlossen angeordneten Schutzabdeckung und gelöst angeordneten Batteriemodulen,
- Fig. 3: eine Ausführungsvariante der erfindungsgemäßen Akkumulatoranordnung, wobei die Schutzabdeckung mit einem Kraftfahrzeugunterfahrschutz einteilig bzw. monolithisch ausgebildet ist,
- Fig. 4: die Darstellung aus Fig. 3 mit einem unverschlossenen Aufnahmeraum und gelöst angeordneten Batteriemodulen,
- Fig. 5: eine vereinfachte Detaildarstellung einer Schraubverbindung, die am Unterfahrschutz ausgebildet ist und im gezeigten Zustand eine elektrische Verbindung trennt,
- Fig. 6: die Detaildarstellung aus Fig. 5 in einem Zustand, bei dem die Schraubverbindung eine derartige elektrische Verbindung schließt,
- Fig. 7: eine Prinzipdarstellung einer aus dem Stand der Technik bekannten Akkumulatoranordnung.

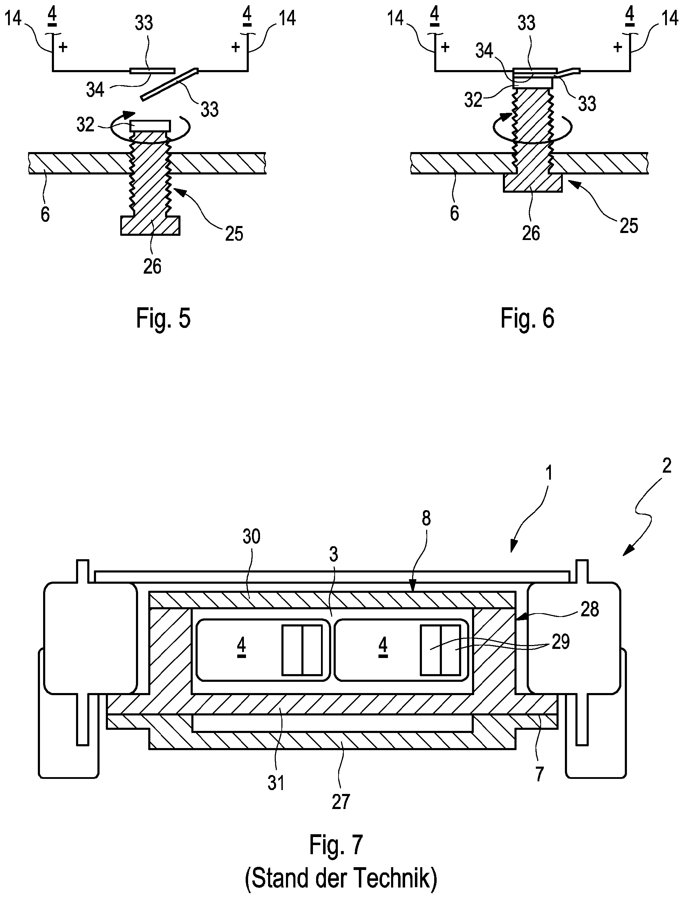

Die zunächst beschriebene Fig. 7 zeigt eine Prinzipdarstellung einer aus dem Stand der Technik bekannten Akkumulatoranordnung 1. Die Akkumulatoranordnung 1 ist in dem gezeigten Beispiel an einer Unterseite 7 eines Fahrgestells 8 eines Kraftfahrzeuges 2 angeordnet. Die Akkumulatoranordnung 1 ist hierbei beispielsweise aus zwei Batteriemodulen 4, die in einem Akkumulatorgehäuse 28 angeordnet sind, gebildet. Die Batteriemodule 4 können mehrere Batteriezellen 29 aufweisen, wobei die gezeigten Batteriemodule 4 beispielsweise jeweils zwei Batteriezellen 29 aufweisen. Zweckmäßig kann das jeweilige Batteriemodul 4 außerdem eine hier durch ein Rohr angedeutete Kühlstruktur 16 zum Kühlen der Batteriezellen 29 aufweisen, die von einem insbesondere flüssigen Kühlmittel 18 durchströmbar ist. Das Akkumulatorgehäuse 28 weist eine Gehäuseoberschale 30 und eine Gehäuseunterschale 31 auf, die einen dichten Aufnahmeraum 3 für die Batteriemodule 4 bilden. Unterhalb der Gehäuseunterschale 31 ist zudem ein Kraftfahrzeugunterfahrschutz 27 angeordnet, der insbesondere an der Gehäuseunterschale 31 und/oder an dem Fahrgestell 8 gehalten sein kann. Zur Entnahme von zumindest einem jeweiligen derartigen Batteriemodul 4 ist es Nötig das vollständige Akkumulatorgehäuse 28 aus dem Fahrgestell 8 des Kraftfahrzeuges 2 zu demontieren.

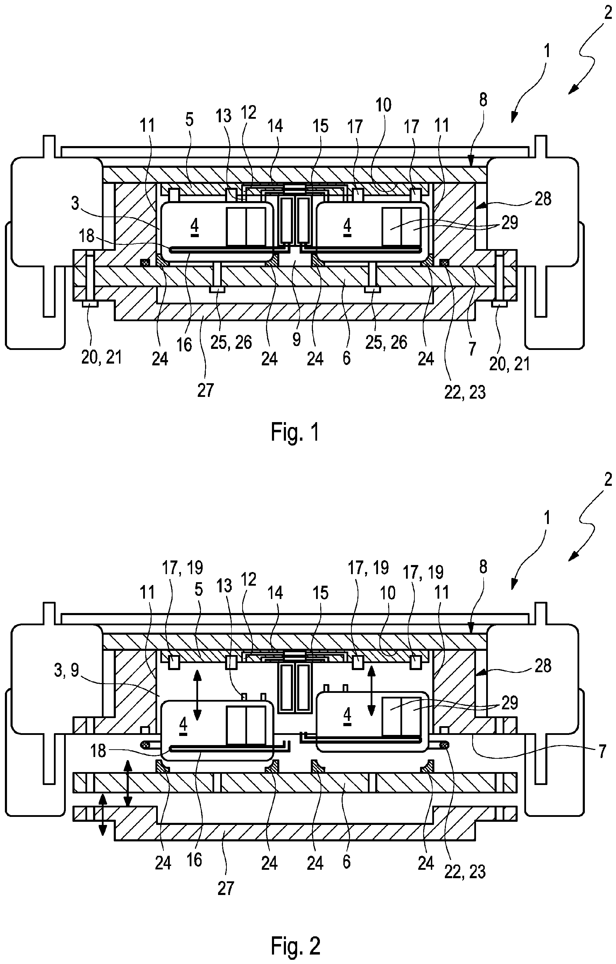

In Fig. 1 ist eine Prinzipdarstellung der erfindungsgemäßen Akkumulatoranordnung 1, insbesondere für ein derartiges Kraftfahrzeug 2, dargestellt. Die Akkumulatoranordnung 1 ist mit einem derartigen durch eine Schutzabdeckung 6 verschlossenen Aufnahmeraum 3 zur Aufnahme von mindestens einem derartigen Batteriemodul 4 ausgestaltet. Der Aufnahmeraum 3 ist direkt durch eine an der Unterseite 7 des Fahrgestells 8 des Kraftfahrzeuges 2 ausgebildeten Aussparung 9 ausgebildet. Der durch die Aussparung 9 am Fahrgestell 8 ausgebildete Aufnahmeraum 3 ist somit zumindest teilweise durch das Fahrgestell 8 an sich begrenzt. Die Aussparung 9 am Fahrgestell 8 kann somit zumindest als ein Teil des Akkumulatorgehäuses 28 bezeichnet werden. Der Aufnahmeraum 3 ist lediglich zu einer Kraftfahrzeugunterseite hin geöffnet ausgebildet. Im Aufnahmeraum 3 ist eine Versorgungseinrichtung 5 angeordnet, die zur Versorgung der beispielhaft angeordneten zwei Batteriemodule 4 vorgesehen ist. Die Versorgungseinrichtung 5 kann dabei unmittelbar an der Unterseite 10 einer die Aussparung 9 begrenzenden Wand 11 des Fahrgestells 8 ausgebildet sein. Ferner kann die Versorgungseinrichtung 5 wenigstens eine erste Schnittstelle 12 aufweisen, die mit zumindest einem derartigen Batteriemodul 4 in Wirkverbindung steht. Es sei gesagt, dass insbesondere für jedes Batteriemodul 4 eine jeweils zugehörige erste Schnittstelle 12 vorgesehen sein kann. Die Batteriemodule 4 können ebenfalls jeweils zumindest eine zweite Schnittstelle 13 aufweisen, die komplementär zu den jeweiligen ersten Schnittstellen 12 der Versorgungseinrichtung 5 ausgebildet sind. Die ersten Schnittstellen 12 und die zweiten Schnittstellen 13 können dahingehend die Wirkverbindung zwischen den Batteriemodulen 4 und der Versorgungseinrichtung 5 ermöglichen. Die jeweiligen ersten Schnittstellen 12 und die zweiten Schnittstellen 13 können steckbar ausgeführt sein, so dass die Wirkverbindung zwischen den Batteriemodulen 4 und der Versorgungseinrichtung 5 einfach und schnell hergestellt werden können. Unter anderem können die ersten Schnittstellen 12 und die zweiten Schnittstellen 13 wenigstens eine der folgenden Verbindungen aufweisen; eine elektrische Anschlussleitung 14 für ein elektrisches Bordnetz, eine elektrische Signalleitung 15 für beispielsweise ein Batteriemanagementsystem und/oder für ein Thermomanagement, eine Rohrleitung, siehe die Kühlstruktur 16, zur Leitung eines Fluids, siehe das Kühlmittel 18, insbesondere zur Kühlung der einzelnen Batteriemodule 4, eine Befestigungseinrichtung 17 zur Fixierung der einzelnen Batteriemodule 4 an der Versorgungseinrichtung 5. Insbesondere kann die jeweilige zweite Schnittstelle 13 somit fluidisch mit der vorstehend genannten Kühlstruktur 16 des jeweiligen Batteriemoduls 4 kommunizierend gekoppelt sein. Durch die hier vorgesehene Integration der Kühlung in die Batteriemodule 4 kann auf eine Druchströmung des Aufnahmeraums 3 mit dem Kühlmittel 18 verzichtet werden. Daher kann im Aufnahmeraum 3 ein nicht näher bezeichneter Trockenraum ausgebildet sein, der frei von Kühlmittel ist und der die Batteriemodule 4 umgibt.

Die Schutzabdeckung 6 kann an der Unterseite 7 des Fahrgestells 8 unmittelbar anliegen. Für eine gewollte fluiddichte Verschließung des Aufnahmeraums 3 kann die Schutzabdeckung 6 die Aussparung 9, die den Aufnahmeraum 3 zumindest teilweise bildet, flächenmäßig überragen, so dass der Aufnahmeraum 3 allseits geschlossen ist. Die Fixierung der Schutzabdeckung 6 kann mittels einer Haltevorrichtung 20, die als Schraubverbindung 21 ausgebildet sein kann, erfolgen. Hierbei kann die Schutzabdeckung 6 an die Unterseite 7 des Fahrgestells 8 geschraubt sein. Zusätzlich kann zwischen der Schutzabdeckung 6 und der Unterseite 7 des Fahrgestells 8 eine Dichtung 22 angeordnet sein. Die Dichtung 22 kann bevorzugt als eine die Aussparung 9 umlaufende und geschlossene Ringdichtung 23 ausgestaltet sein, so dass der Aufnahmeraum 3 nach Außen abgedichtet ist. Außerdem kann die Dichtung 22 zwischen der Schutzabdeckung 6 und der Unterseite 7 des Fahrgestells 8 zumindest teilweise verpresst sein.

Die Schutzabdeckung 6 kann ferner an einer der Aussparung 9 bzw. dem Fahrgestell 8 zugewandten Seite eine Positioniereinrichtung 24 aufweisen, die derart ausgebildet ist, dass diese zumindest ein derartiges Batteriemodul 4 im Aufnahmeraum 3 ausrichten und fixieren kann. Die Positioniereinrichtung 24 kann als eine Art Negativkontur zur Struktur der Batteriemodule 4 ausgebildet sein, so dass die einzelnen Batteriemodule 4 formschlüssig an der Schutzabdeckung 6 gehalten werden können. Hierzu kann für jedes einzelne Batteriemodul 4 eine zugehörige Positioniereinrichtung 24 vorgesehen sein. Die Ausrichtung bzw. die Fixierung der Batteriemodule 4 erfolgt beim Verschließen des Aufnahmeraums 3 durch die Schutzabdeckung 6. Im Wesentlichen können die einzelnen Batteriemodule 4 zwischen der Schutzabdeckung 6 und der Versorgungseinrichtung 5 in Z-Richtung zumindest derart verpresst sein, dass diese fest fixiert im Aufnahmeraum 3 angeordnet sind.

Außerdem können die einzelnen Batteriemodule 4 jeweils mittels einer Schraubverbindung 25 fest mit der Schutzabdeckung 6 fixiert werden. Beispielsweise kann hierzu eine Schraube 26 der Schraubverbindung 25 in einem komplementär zur Schraube 26 ausgebildeten Gewinde an der Schutzabdeckung 6 angeordnet sein. Bei einem Eindrehen einer derartigen Schraube 26 in den Bereich des Aufnahmeraums 3 drückt diese gegen zumindest ein derartiges Batteriemodul 4 und verspannt dieses dabei in Z-Richtung gegen die Versorgungseinrichtung 5 oder gegen die Unterseite 10 der die Aussparung 9 begrenzenden Wand 11 des Fahrgestells 8. Bevorzugt kann für jedes Batteriemodul 4 mindestens eine, besonders bevorzugt mehrere, solche Schraubverbindungen 25 mit einer solchen Schraube 26 zur Fixierung der jeweiligen Batteriemodule 4 vorgesehen sein.

Fig. 2 zeigt die Prinzipdarstellung aus Fig. 1 mit einer unverschlossen angeordneten Schutzabdeckung 6 und gelöst angeordneten Batteriemodulen 4. Die einzelnen Batteriemodule 4 sind in Z-Richtung in den dafür vorgesehenen Aufnahmeraum 3 einsetzbar bzw. entnehmbar. Das heißt, dass die Batteriemodule 4, bei der Anwendung in einem Kraftfahrzeug 2, von der Unterseite 7 des Fahrgestells 8 an die Versorgungseinrichtung 5 ansteckbar sind. Die Befestigungseinrichtung 17 kann eine Vorfixierung der einzelnen Batteriemodule 4 an der Versorgungseinrichtung 5 bewirken. Hierbei kann die Befestigungseinrichtung 17 beispielsweise als eine Feder-Rast-Verbindung 19 zwischen zumindest einem Batteriemodul 4 und der Versorgungseinrichtung 5 ausgebildet sein. Die Befestigungseinrichtung 17 ist bevorzugt derart ausgelegt, dass diese zumindest das Eigengewicht des zu fixierenden bzw. zu haltenden Batteriemoduls 4 tragen kann.

Denkbar ist, dass die Schutzabdeckung 6 zwischen der Unterseite 7 des Fahrgestells 8 und einem derartigen Kraftfahrzeugunterfahrschutz 27 verklemmt ist. Hierbei kann der Kraftfahrzeugunterfahrschutz 27 unmittelbar mit der Unterseite 7 des Fahrgestells 8 in Verbindung stehen oder mittelbar durch die zwischengelagerte Schutzabdeckung 6.

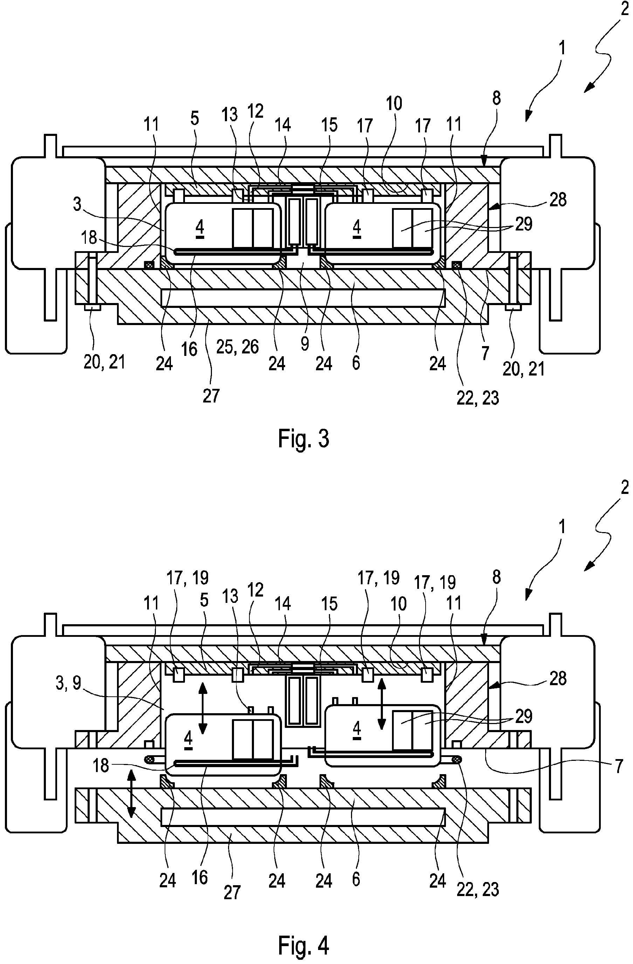

Die Fig. 3 und Fig. 4 zeigen eine Ausführungsvariante der erfindungsgemäßen Akkumulatoranordnung 1, wobei die Schutzabdeckung 6 mit einem Kraftfahrzeugunterfahrschutz 27 einteilig bzw. monolithisch ausgebildet ist. Bei dieser Ausführungsvariante lassen sich alle zuvor beschriebenen Merkmale der Schutzabdeckung 6 direkt auf den Kraftfahrzeugunterfahrschutz 27 übertragen.

Die Fig. 4 bildet einen demontierten Kraftfahrzeugunterfahrschutz 27 ab, wodurch die Entnahme eines Batteriemoduls 4 ermöglicht wird.

Die Fig. 5 und Fig. 6 zeigen jeweils eine vereinfachte Detaildarstellung einer Schraubverbindung 25, die an der Schutzabdeckung 6 ausgebildet sein kann. Die Schraubverbindung 25 ist in zwei unterschiedlichen Einschraubzuständen einer Schraube 26 gezeigt, wodurch eine elektrische Verbindungsstelle 35 getrennt oder geschlossen ist.

In Fig. 5 ist die Schraube 26 in einem Einschraubzustand dargestellt bei der die elektrische Verbindungsstelle 34 getrennt ist. Hierbei stehen jeweilige Kontaktstellen 33 der elektrischen Anschlussleitungen 14 nicht in direktem Kontakt, so dass keine elektrische Verbindung zwischen zwei Batteriemodulen 4 geschlossen ist. In Fig. 6 hingegen ist die Schraube 26 in einem Einschraubzustand dargestellt bei der die elektrische Verbindungsstelle 34 geschlossen ist. Das heißt, dass die jeweiligen Kontaktflächen 33 unmittelbar miteinander in Verbindung stehen, so dass die beiden elektrischen Anschlussleitungen 14 elektrisch miteinander verbunden sind. Es sei gesagt, dass die Schraube 26 der zumindest einen Schraubverbindung 25 gleichermaßen zur Fixierung der Schutzabdeckung 6 verwendet werden kann. Die Schraubverbindung 25 kann somit gleichermaßen die Fixierung der Schutzabdeckung 6, als auch die elektrische Verbindung zwischen zwei Batteriemodulen 4 ermöglichen. Die Schraube 26 kann zweckmäßig an einer dem Schraubenkopf abgewandten Längsende einen Isolator 32 aufweisen, der die Schraube 26 frei von jeglichem Potential hält.

## Patentansprüche

1. Akkumulatoranordnung (1), insbesondere für ein Kraftfahrzeug (2), umfassend;
- einen Aufnahmeraum (3) zur Aufnahme von mindestens einem Batteriemodul (4),
- eine im Aufnahmeraum (3) angeordnete Versorgungseinrichtung (5), die zur Versorgung des mindestens einen Batteriemoduls (4) vorgesehen ist,
- eine Schutzabdeckung (6), die den Aufnahmeraum (3) zumindest teilweise verschließt,
wobei der Aufnahmeraum (3) direkt durch eine an einer Unterseite (7) eines Fahrgestells (8) des Kraftfahrzeugs (2) ausgebildete Aussparung (9) ausgebildet ist,
**dadurch gekennzeichnet,**
- **dass** die Versorgungseinrichtung (5) unmittelbar an einer Unterseite (10) einer die Aussparung (9) begrenzenden Wand (11) des Fahrgestells (8) ausgebildet ist und wenigstens eine erste Schnittstelle (12) aufweist, die mit dem zumindest einen Batteriemodul (4) in Wirkverbindung steht,
- **dass** das zumindest eine Batteriemodul (4) ebenfalls zumindest eine zweite Schnittstelle (13) aufweist, die komplementär zu der wenigstens einen ersten Schnittstelle (12) der Versorgungseinrichtung (5) ausgebildet ist, sodass das zumindest eine Batteriemodul (4) mit der Versorgungseinrichtung (5) in Wirkverbindung steht,
- **dass** die erste Schnittstelle (12) und die zweite Schnittstelle (13) jeweils steckbar ausgeführt sind.

2. Akkumulatoranordnung nach Anspruch 1,
**dadurch gekennzeichnet,**
**dass** die wenigstens eine erste Schnittstelle (12) an der Versorgungseinrichtung (5) sowie die zumindest eine zweite Schnittstelle (13) am Batteriemodul (4) insbesondere zumindest eine elektrische Anschlussleitung (14) für ein elektrisches Bordnetz und/oder zumindest eine elektrische Signalleitungen (15) für ein Batteriemanagementsystem und/oder zumindest eine elektrische Signalleitung (15) für ein Thermomanagement und/oder zumindest eine Rohrleitung (16) zur Leitung eines Fluids (18) und/oder zumindest eine Befestigungseinrichtung (17) umfassen.

3. Akkumulatoranordnung nach Anspruch 1,
**dadurch gekennzeichnet,**
**dass** die wenigstens eine erste Schnittstelle (12) an der Versorgungseinrichtung (5) sowie die zumindest eine zweite Schnittstelle (13) am Batteriemodul (4) zumindest eine elektrische Leitung (14, 15) und zumindest eine Rohrleitung (16) zur Leitung eines Fluids (18) umfassen und/oder dass das Fluid (18) eine Kühlflüssigkeit ist und dass das jeweilige Batteriemodul (4) eine von der Kühlflüssigkeit durchströmbare Kühlstruktur (16) aufweist, die mit der jeweiligen zweiten Schnittstelle (13) fluidisch verbunden ist.

4. Akkumulatoranordnung nach Anspruch 3,
**dadurch gekennzeichnet,**
**dass** im Aufnahmeraum (3) ein das jeweilige Batteriemodul (4) umgebender Trockenraum ausgebildet ist, der frei von der Kühlflüssigkeit (18) ist und/oder dass die Befestigungseinrichtung (17) als eine Rastverbindung (19) ausgebildet ist und das zumindest eine Batteriemodul (4) an der Versorgungseinrichtung (5), insbesondere in Z-Richtung, fixiert bzw. verrastet.

5. Akkumulatoranordnung nach einem der Ansprüche 1 bis 2,
**dadurch gekennzeichnet,**
**dass** das zumindest eine Batteriemodul (4) in Z-Richtung entlang der Aussparung (9) begrenzenden Wand (11) der Versorgungseinrichtung (5) einsetzbar und ebenso entnehmbar ist.

6. Akkumulatoranordnung nach Anspruch 1 und 3,
**dadurch gekennzeichnet,**
**dass** die wenigstens eine erste Schnittstelle (12) an der Versorgungseinrichtung (5) sowie die zumindest eine zweite Schnittstelle (13) am Batteriemodul (4) steckbar sind.

7. Akkumulatoranordnung nach einem der Ansprüche 1 bis 3,
**dadurch gekennzeichnet,**
**dass** eine an der Versorgungseinrichtung (5) vorgesehene Befestigungseinrichtung (17) als eine lösbare form- und/oder kraftschlüssige Wirkverbindung ausgebildet ist und/oder dass die Schutzabdeckung (6) mittels einer Haltevorrichtung (20), insbesondere einer Schraubverbindung (21), an der Unterseite (7) des Fahrgestells (8) gehalten ist.

8. Akkumulatoranordnung nach einem der Ansprüche 1 bis 5,
**dadurch gekennzeichnet,**
**dass** die Schutzabdeckung (6) den Aufnahmeraum (3), insbesondere fluiddicht, verschließt.

9. Akkumulatoranordnung nach einem der Ansprüche 1 bis 6,
**dadurch gekennzeichnet,**
**dass** die Schutzabdeckung (6) an der Unterseite (7) des Fahrgestells (8) unmittelbar anliegt und dabei zumindest den Bereich der Aussparung (9) überdeckt.

10. Akkumulatoranordnung nach Anspruch 7 oder 4,
**dadurch gekennzeichnet,**
**dass** zwischen der Schutzabdeckung (6) und der Unterseite (7) des Fahrgestells (8) eine Dichtung (22), insbesondere eine geschlossene umlaufende Ringdichtung (23), vorgesehen ist, die bevorzugt zumindest teilweise zwischen der Schutzabdeckung (6) und der Unterseite (7) des Fahrgestells (8) verpresst ist.

11. Akkumulatoranordnung nach einem der Ansprüche 1 bis 8,
**dadurch gekennzeichnet,**
**dass** die Schutzabdeckung (6) an einer der Aussparung (9) zugewandten Seite im Bereich des Aufnahmeraumes (3), insbesondere im Bereich des zumindest einen Batteriemoduls (4), eine Positioniereinrichtung (24) aufweist die derart ausgebildet ist, dass diese das zumindest eine Batteriemodul (4) im Aufnahmeraum (3) ausrichtet und insbesondere zumindest teilweise fixiert.

12. Akkumulatoranordnung nach einem der Ansprüche 1 bis 9,
**dadurch gekennzeichnet,**
**dass** das zumindest eine Batteriemodul (4) fest an der Schutzabdeckung (6) mittels zumindest einer Schraubverbindung (25), insbesondere mit mehreren Schraubverbindungen (25), fixiert ist.

13. Akkumulatoranordnung nach Anspruch 8,
**dadurch gekennzeichnet,**
**dass** eine Schraube (26) der Schraubverbindung (25) zwischen der Schutzabdeckung (6) und dem jeweiligen Batteriemodul (4) eine elektrische Verbindung zwischen zumindest zwei Batteriemodulen (4) je nach einschraubgrad der Schraube (26) herstellt oder trennt.

14. Akkumulatoranordnung nach einem der Ansprüche 1 bis 9,
**dadurch gekennzeichnet,**
**dass** die Schutzabdeckung (6) zwischen dem Fahrgestell (8) und einem Kraftfahrzeugunterfahrschutz (27) gehalten ist.

15. Kraftfahrzeug (2) mit einer Akkumulatoranordnung (1) nach einem der vorhergehenden Ansprüche, wobei eine Schutzabdeckung (6) mit einem Kraftfahrzeugunterfahrschutz (27) einteilig bzw. monolithisch ausgebildet ist.

## Claims

1. Battery arrangement (1), particularly for a motor vehicle (2), comprising;
- a receiving space (3) for receiving at least one battery module (4),
- a supply device (5) arranged in the receiving space (3), which is provided for supplying the at least one battery module (4),
- a protective cover (6) which at least partially encloses the receiving space (3),
wherein
the receiving space (3) is formed directly by a cut-out (9) formed on a lower side (7) of a chassis (8) of the motor vehicle (2),
**characterised in**
- **that** the supply device (5) is formed directly on a lower side (10) of a wall (11), delimiting the cut-out (9), of the chassis (8) and has at least one first interface (12) which is in an operational connection with the at least one battery module (4),
- **that** the at least one battery module (4) also has at least one second interface (13) which is designed so as to be complementary to the at least one first interface (12) of the supply device (5), such that the at least one battery module (4) is in operational connection with the supply device (5),
- **that** the first interface (12) and the second interface (13) are designed in each case so as to be able to be plugged in.

2. Battery arrangement according to claim 1,
**characterised in**
**that** the at least one first interface (12) on the supply device (5) as well as the at least one second interface (13) on the battery module (4) comprise particularly at least one electrical connecting line (14) for an electrical on-board power supply and/or at least one electrical signal lines (15) for a battery management system and/or at least one electrical signal line (15) for a thermal management and/or at least one pipeline (16) for conducting a fluid (18) and/or at least one fastening device (17).

3. Battery arrangement according to claim 1,
**characterised in**
**that** the at least one first interface (12) on the supply device (5) as well as the at least one second interface (13) on the battery module (4) comprise at least one electrical line (14, 15) and at least one pipeline (16) for conducting a fluid (18) and/or that the fluid (18) is a coolant fluid and that the respective battery module (4) has a cooling structure (16) through which coolant fluid can flow, which cooling structure is fluidically connected with the respective second interface (13).

4. Battery arrangement according to claim 3,
**characterised in**
**that** in the receiving space (3) is formed a dry space surrounding the respective battery module (4) which is free of coolant fluid (18) and/or that the fastening device (17) is in the form of a latching connection (19) and the at least one battery module (4) fastens or latches to the supply device (5), in particular in Z direction.

5. Battery arrangement according to any of claims 1 to 2,
**characterised in**
**that** the at least one battery module (4) can be set in and also removed in Z direction along the wall (11), delimiting cut-out (9), of the supply device (5).

6. Battery arrangement according to claim 1 and 3,
**characterised in**
**that** the at least one first interface (12) on the supply device (5) as well as the at least one second interface (13) on the battery module (4) are able to be plugged-in.

7. Battery arrangement according to any of claims 1 to 3,
**characterised in**
**that** a fastening device (17) provided on the supply device (5) is in the form of a detachable form-fitting and/or force-fitting operational connection and/or that the protective cover (6) is held on the lower side (7) of the chassis (8) by means of a holding device (20), in particular a screw connection (21).

8. Battery arrangement according to any of claims 1 to 5,
**characterised in**
**that** the protective cover (6) closes the receiving space (3), in particular in a fluid-tight manner.

9. Battery arrangement according to any of claims 1 to 6,
**characterised in**
**that** the protective cover abuts directly on the lower side (7) of the chassis (8) and in this regard covers at least the region of the cut-out (9).

10. Battery arrangement according to claim 7 or 4,
**characterised in**
**that** between the protective cover (6) and the lower side (7) of the chassis (8) is provided a seal (22), in particular a closed circumferential annular seal (23), which is preferably pressed at least partially between the protective cover (6) and the lower side (7) of the chassis (8).

11. Battery arrangement according to any of claims 1 to 8,
**characterised in**
**that** the protective cover (6) has a positioning device (24) on a side facing the cut-out (9) in the region of the receiving space (3), in particular in the region of the at least one battery module (4), which positioning device is configured such that it aligns the at least one battery module (4) in the receiving space (3) and in particular fixes it at least partially.

12. Battery arrangement according to any of claims 1 to 9,
**characterised in**
**that** the at least one battery module (4) is securely fixed to the protective cover (6) by means of a screw connection (25), particularly with several screw connections (25).

13. Battery arrangement according to claim 8,
**characterised in**
**that** a screw (26) of the screw connection (25) between the protective cover (6) and the respective battery module (4) establishes or separates an electrical connection between at least two battery modules (4) depending on the degree to which the screw (26) is screwed in.

14. Battery arrangement according to any of claims 1 to 9,
**characterised in**
**that** the protective cover (6) is held between the chassis (8) and a motor vehicle underride protection (27).

15. Motor vehicle (2) having a battery arrangement (1) according to any of the preceding claims, wherein a protective cover (6) is formed integrally or monolithically with a motor vehicle underride protection (27).

## Revendications

1. Ensemble accumulateur (1), en particulier pour un véhicule automobile (2), comprenant :
- un espace de logement (3) pour le logement d'au moins un module de batterie (4),
- un dispositif d'alimentation (5) agencé dans l'espace de logement (3) qui est prévu pour l'alimentation de l'au moins un module de batterie (4),
- un recouvrement de protection (6) qui ferme au moins partiellement l'espace de logement (3),
dans lequel l'espace de logement (3) est directement réalisé par un évidement (9) réalisé au niveau d'un côté inférieur (7) d'un châssis (8) du véhicule automobile (2),
**caractérisé en ce**
- **que** le dispositif d'alimentation (5) est directement réalisé au niveau d'un côté inférieur (10) d'une paroi (11) délimitant l'évidement (9) du châssis (8) et présente au moins une première interface (12) qui est en liaison active avec l'au moins un module de batterie (4),
- **que** l'au moins un module de batterie (4) présente aussi au moins une seconde interface (13) qui est réalisée de manière complémentaire à l'au moins une première interface (12) du dispositif d'alimentation (5) de sorte que l'au moins un module de batterie (4) soit en liaison active avec le dispositif d'alimentation (5),
- **que** la première interface (12) et la seconde interface (13) sont réalisées respectivement de manière enfichable.

2. Ensemble accumulateur selon la revendication 1,
**caractérisé en ce**
**que** l'au moins une première interface (12) au niveau du dispositif d'alimentation (5) ainsi que l'au moins une seconde interface (13) au niveau du module de batterie (4) comportent en particulier au moins un câble de raccordement (14) électrique pour un réseau de bord électrique et/ou au moins un câbles de signal (15) électrique pour un système de gestion de batterie et/ou au moins un câble de signal (15) électrique pour une gestion thermique et/ou au moins une canalisation (16) pour la conduite d'un fluide (18) et/ou au moins un dispositif de fixation (17).

3. Ensemble accumulateur selon la revendication 1,
**caractérisé en ce**
**que** l'au moins une première interface (12) au niveau du dispositif d'alimentation (5) ainsi que l'au moins une seconde interface (13) au niveau du module de batterie (4) comportent au moins un câble électrique (14, 15) et au moins une canalisation (16) pour la conduite d'un fluide (18) et/ou que le fluide (18) est un liquide de refroidissement et que le module de batterie (4) respectif présente une structure de refroidissement (16) pouvant être traversée par le liquide de refroidissement qui est reliée de manière fluidique à la seconde interface (13) respective.

4. Ensemble accumulateur selon la revendication 3,
**caractérisé en ce**
**qu'**un espace sec entourant le module de batterie (4) respectif est réalisé dans l'espace de logement (3), lequel est exempt du liquide de refroidissement (18) et/ou que le dispositif de fixation (17) est réalisé comme une liaison d'encliquetage (19) et fixe ou encliquète l'au moins un module de batterie (4) au dispositif d'alimentation (5), en particulier dans le sens Z.

5. Ensemble accumulateur selon l'une quelconque des revendications 1 à 2,
**caractérisé en ce**
**que** l'au moins un module de batterie (4) peut être inséré et aussi retiré dans le sens Z le long de la paroi (11) délimitant évidement (9) du dispositif d'alimentation (5).

6. Ensemble accumulateur selon les revendications 1 et 3,
**caractérisé en ce**
**que** l'au moins une première interface (12) peut être enfichée au niveau du dispositif d'alimentation (5) ainsi que l'au moins une seconde interface (13) peut être enfichée au niveau du module de batterie (4).

7. Ensemble accumulateur selon l'une quelconque des revendications 1 à 3,
**caractérisé en ce**
**qu'**un dispositif de fixation (17) prévu au niveau du dispositif d'alimentation (5) est réalisé comme une liaison active amovible par complémentarité de formes et/ou à force et/ou que le recouvrement de protection (6) est maintenu au moyen d'un dispositif de retenue (20), en particulier d'une liaison par vissage (21), au niveau du côté inférieur (7) du châssis (8).

8. Ensemble accumulateur selon l'une quelconque des revendications 1 à 5,
**caractérisé en ce**
**que** le recouvrement de protection (6) ferme l'espace de logement (3), en particulier de manière étanche au fluide.

9. Ensemble accumulateur selon l'une quelconque des revendications 1 à 6,
**caractérisé en ce**
**que** le recouvrement de protection (6) repose directement contre le côté inférieur (7) du châssis (8) et recouvre ainsi au moins la zone de l'évidement (9).

10. Ensemble accumulateur selon la revendication 7 ou 4,
**caractérisé en ce**
**qu'**un joint d'étanchéité (22), en particulier un joint d'étanchéité annulaire (23) périphérique fermé est prévu entre le recouvrement de protection (6) et le côté inférieur (7) du châssis (8), lequel est compressé de préférence au moins partiellement entre le recouvrement de protection (6) et le côté inférieur (7) du châssis (8).

11. Ensemble accumulateur selon l'une quelconque des revendications 1 à 8,
**caractérisé en ce**
**que** le recouvrement de protection (6) présente au niveau d'un côté tourné vers l'évidement (9) dans la zone de l'espace de logement (3), en particulier dans la zone de l'au moins un module de batterie (4), un dispositif de positionnement (24) qui est réalisé de telle manière que celui-ci oriente et en particulier fixe au moins partiellement l'au moins un module de batterie (4) dans l'espace de logement (3).

12. Ensemble accumulateur selon l'une quelconque des revendications 1 à 9,
**caractérisé en ce**
**que** l'au moins un module de batterie (4) est fermement fixé au recouvrement de protection (6) au moyen d'au moins une liaison par vissage (25), en particulier avec plusieurs liaisons par vissage (25).

13. Ensemble accumulateur selon la revendication 8,
**caractérisé en ce**
**qu'**une vis (26) de la liaison par vissage (25) entre le recouvrement de protection (6) et le module de batterie (4) respectif établit ou sépare une liaison électrique entre au moins deux modules de batterie (4) selon le degré de vissage de la vis (26).

14. Ensemble accumulateur selon l'une quelconque des revendications 1 à 9,
**caractérisé en ce**
**que** le recouvrement de protection (6) est maintenu entre le châssis (8) et un dispositif anti-encastrement de véhicule automobile (27).

15. Véhicule automobile (2) avec un ensemble accumulateur (1) selon l'une quelconque des revendications précédentes, dans lequel un recouvrement de protection (6) est réalisé avec un dispositif anti-encastrement de véhicule automobile (27) d'un seul tenant ou de manière monolithique.
